# EUROPEAN PATENT SPECIFICATION

(11) **EP 1 900 599 B1**
(45) Date of publication and mention of the grant of the patent: **16.03.2011**
(21) Application number: 07018073.2
(22) Date of filing: 14.09.2007
(51) Int. Cl.: B62B 7/08, B62B 7/14

(54) **Foldable baby stroller frame**
Zusammenklappbarer Rahmen für einen Kinderwagen
Cadre de poussette de bébé pliable

(30) Priority: 18.09.2006 CN 200620064248 U
(43) Date of publication of application: 19.03.2008
(73) Proprietor: Lerado (Zhong Shan) Industrial Co., Ltd., Guang Dong Province (CN)
(72) Inventor: Li, Wei-Yeh, Jen-Der Hsian Tainan County (TW)
(74) Representative: TER MEER - STEINMEISTER & PARTNER GbR

(56) References cited:
- EP-A- 0 522 783
- EP-A- 1 764 281
- DE-A1- 10 132 019
- US-A- 2 842 374

## Description

### BACKGROUND OF THE INVENTION

### FIELD OF THE INVENTION

This invention relates to a foldable stroller frame. More specifically, this invention relates to a stroller that has a collapsible wheeled frame having a swivel base for pivotally supporting a foldable upper frame, and a release mechanism mounted on the foldable upper frame for actuating the folding of the collapsible wheeled frame and the foldable upper frame.

### DESCRIPTION OF THE RELATED ART

Traditional collapsible stroller frame normally has a pair of articulated joints disposed on opposite sides of the frame for pivotally connecting the push arms and the front struts thereof.

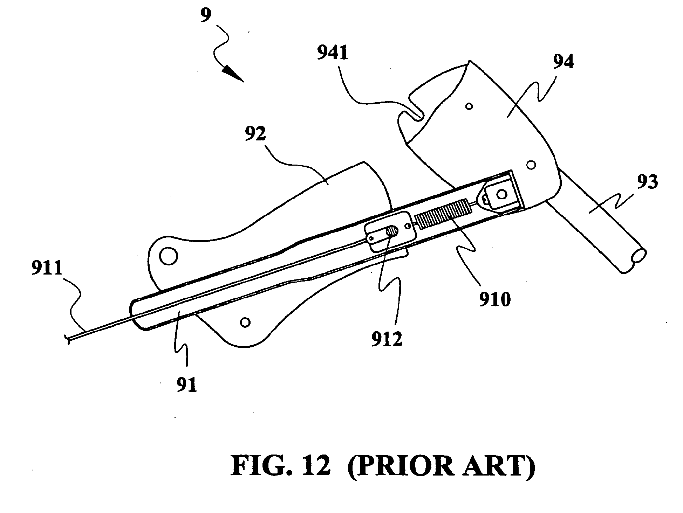

As shown in FIG 12, the articulated joint 9 used to connect the push arm 91 and the front strut 93, typically includes an upper joint member 92 and a lower joint member 94. The push arm 91 is connected the upper joint member 92 and has a distal portion pivotally connected to the lower joint member 94.

The lower joint member 94 is connected with the front strut 93 and has a slot 941 formed at the upper side thereof. A connecting member 911, latch member 912 and a spring 910 are movably mounted inside the lower end of the push arm 91. When the push arm 91 is rotated about the lower joint member 94 to aligned to the front strut 93, the spring 910 is functioning to bias the latch member 912 to engage with the slot 941, so as to lock the articulated joint 9 in a non-rotatable state thereby to keep the push arm 91 and the front strut 93 in an erected position.

When folding the collapsible stroller frame, the user may pull the latch member 912 backwardly through the connecting member 91 against the biasing of the spring 910 to unlock the articulated joint 9, this made the push arm 91 is then rotatable, therefore, the traditional collapsible stroller frame is foldable for saving space of storage and transportation.

As the lower joint member 94 of the articulated joint 9 is made of plastic material, in case the slot 941 is broken, the stroller may accidentally become folded in use, this shall endanger the baby passenger sitting inside.

DE 101 32 019 A1 discloses a foldable baby stroller frame having a collapsible wheeled frame with a front strut, a pair of rear struts, and a pair of lockable articulated arms which are pivotably and controllably connected between the front strut and the rear struts. The foldable baby stroller frame further comprises a foldable upper frame and a release mechanism operatively mounted on the foldable upper frame for unlocking the pair of lockable articulated arms for folding the collapsible-wheeled frame.

EP 0 522 783 A2 discloses a pushchair that has a folding chassis on which a seat body is mounted by mounting means. The mounting means permit relative angular movement between the seat body and the chassis about a vertical axis. A handle is pivotally connected to the chassis below the seat body.

### SUMMARY OF THE INVENTION

In order to avoid the possible danger of the traditional collapsible stroller frame, the present invention provides a foldable baby stroller frame with a different folding mechanism.

The foldable baby stroller frame according to the present invention comprises a collapsible wheeled frame, a foldable upper frame, and at least a release mechanism. The collapsible wheeled frame comprises at least a front strut, a pair of rear struts, a pair of lockable articulated arms, and a swivel base.

The swivel base is pivotally connected with the front strut and the rear strut, and further has a vertical shaft hole for pivotally connecting and supporting the foldable upper frame.

The pair of lockable articulated arms is pivotally connected between the front strut and the rear strut, and has a locked position for keeping the collapsible wheeled frame in an un-foldable state and a foldable position for folding the collapsible wheeled frame.

The release mechanism is operatively mounted on the foldable upper frame and associates with the pair of lockable articulated arms via a connecting member for actuating the folding of the collapsible wheeled frame and the foldable upper frame.

### BRIEF DESCRIPTION OF THE DRAWINGS

The present invention will become more fully understood from the detailed description given hereinbelow and the accompanying drawings, which are given by way of illustration only, and thus are not limitative of the present invention, and wherein:

FIG. 1 is a perspective view of a preferred embodiment of the collapsible baby stroller frame of the present invention.

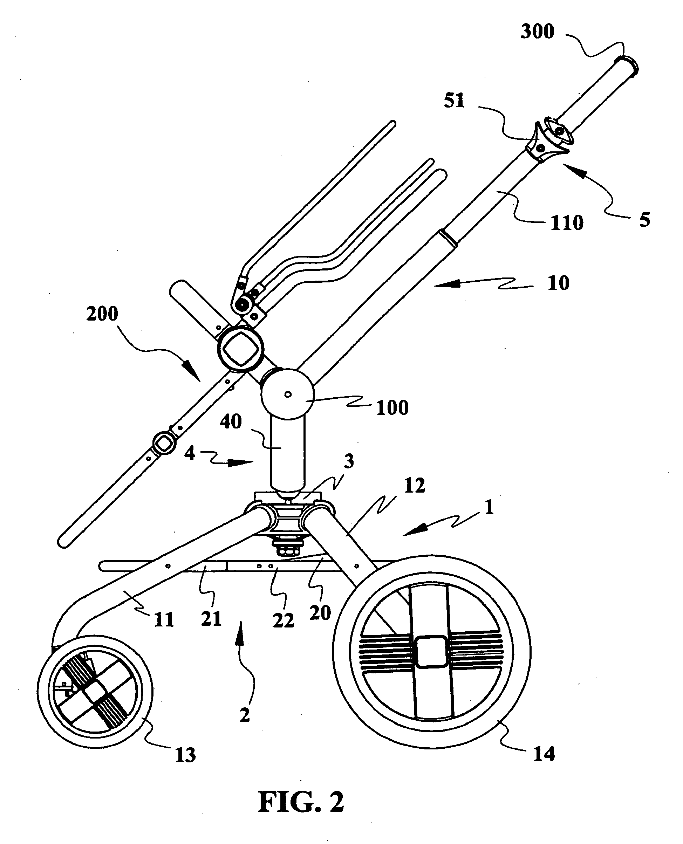

FIG. 2 is a side view of the collapsible baby stroller frame of FIG. 1.

FIG. 3 is a partially exploded perspective view of the collapsible baby stroller frame according to the preferred embodiment.

FIG. 4 is a partially exploded perspective view of a foldable upper frame according to the preferred embodiment.

FIG. 5 is a partially cross-sectional view of joint of the foldable upper frame according to the preferred embodiment.

FIG. 6 is a partially schematic cross-sectional view showing the connecting of the collapsible wheeled frame and the foldable upper frame according to the preferred embodiment.

FIG. 7 is a schematic cross-sectional view showing the locking mechanism of the pair of lockable articulated arms according to the preferred embodiment.

FIG. 8 is an exploded perspective view of the pair of lockable articulated arms of the collapsible baby stroller frame according to the preferred embodiment.

FIG. 9 is a side view illustrating the folding operation of the collapsible baby stroller frame according to the preferred embodiment.

FIG. 10 is a side view illustrating the collapsible baby stroller frame in a folded position after the folding operation.

FIG. 11 is a schematic side view showing the operation of the collapsible baby stroller frame according to the preferred embodiment.

FIG. 12 is schematic cross-sectional view showing an articulated joint of traditional collapsible stroller frame.

### DETAILED DESCRIPTION OF THE PREFERRED EMBODIMENTS

Reference will now be made in detail to presently preferred embodiments of the invention, examples of which are illustrated in the accompanying drawings. An effort has been made to use the same reference numbers throughout the drawings to refer to the same or like parts.

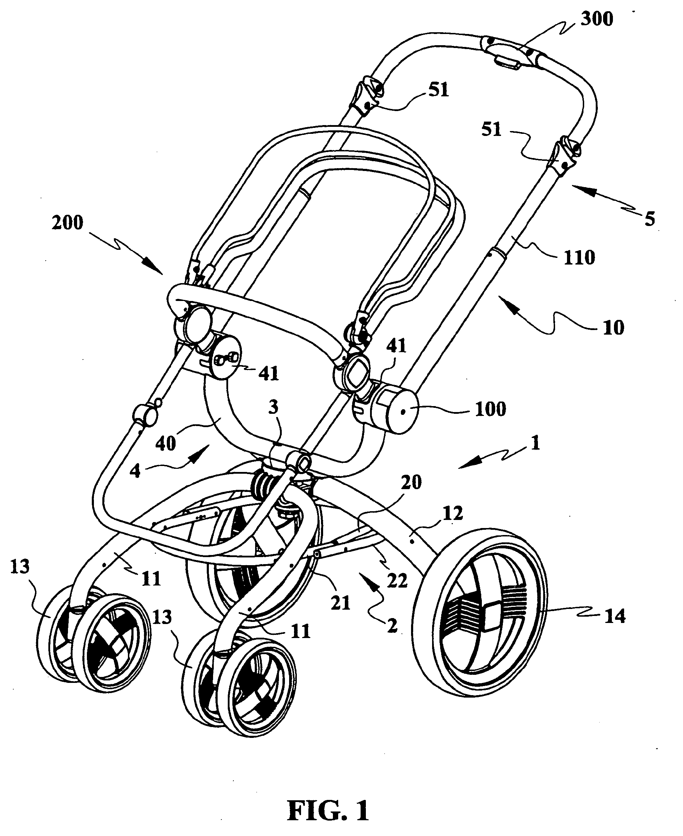

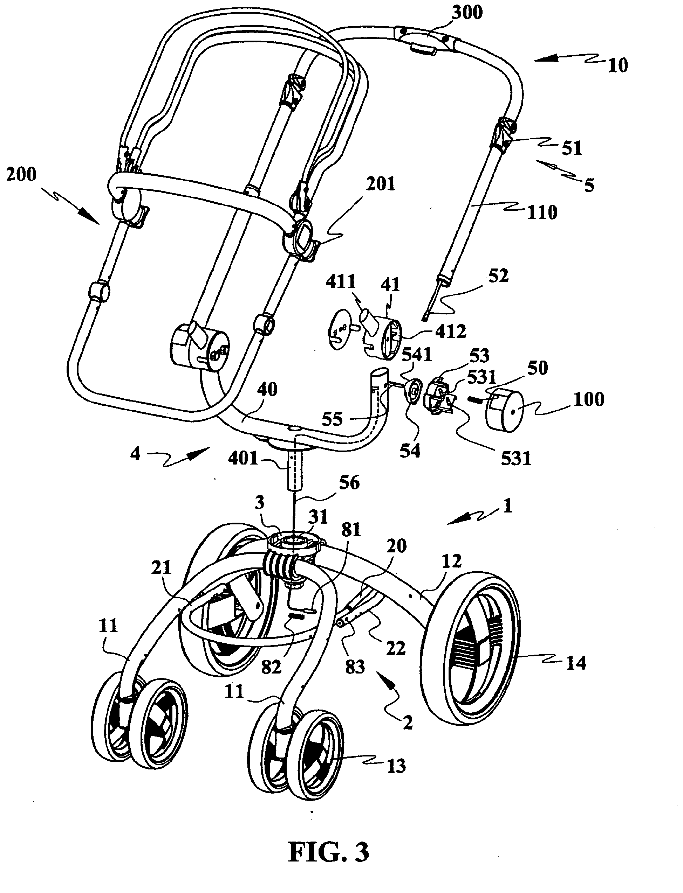

Referring to FIGS. 1 and 3, a preferred embodiment of the collapsible baby stroller frame according to the present invention comprises a collapsible wheeled frame 1, a foldable upper frame 10, and at least a release mechanism 5.

The collapsible wheeled frame 1 comprises at least a front strut 11 with castor wheels 13, a pair of rear strut 12 with rear wheels 14, a pair of lockable articulated arms 2, and a swivel base 3.

The swivel base 3 is pivotally connected with the front strut 11 and the rear struts 12, and further has a vertical shaft hole 31 for pivotally connecting and supporting the foldable upper frame 10.

The pair of lockable articulated arms 2 is pivotally connected between the front strut 11 and the rear struts 12, and has a locked position for keeping the collapsible wheeled frame 1 in an un-foldable state and a foldable position for folding the collapsible wheeled frame 1.

The release mechanism 5 is operatively mounted on the foldable upper frame 10 and associates with the pair of lockable articulated arms 2 via a connecting member 56 for actuating the folding of the collapsible wheeled frame 1 and the foldable upper frame 10.

The foldable upper frame 10 includes a swivel rack 4, a push arm 110, and a pair of joints 100. The pair of joints 100 are lockable and pivotable connect between the swivel rack 4 and the push arm 110.

Preferably, the collapsible wheeled frame 1 may further comprise a biasing member 20 which can be embodied as a pneumatic rod or resilient member for biasing and helping the folding the pair of lockable articulated arms. The biasing member 20 has one end pivoted to the rear strut 12, and another end pivot to the middle portion of the pair of lockable articulated arms 2.

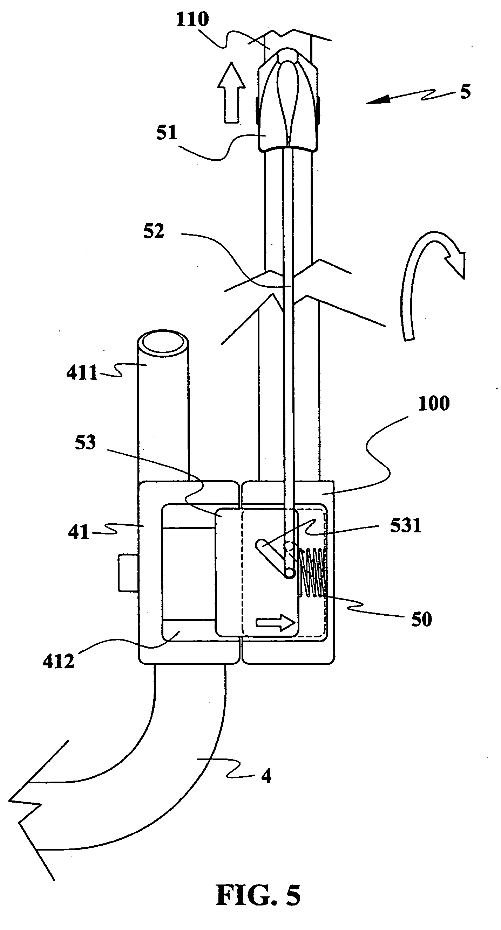

Referring to FIGS. 3 and 5, the swivel rack 4 includes a U-shaped arm 40, a vertical shaft 401, and a pair of mounts 41. The pair of mounts 41 is mounted on the distal ends of the U-shaped arm 40 and has a connecting member 411 for detachably connecting and supporting a seat frame member 200 or a baby carrier (not shown). For instance, the connecting member 411 may be a plug extending upwardly from each of the mounts 41, and the seat frame member 200 or a baby carrier may include a pair of sockets 201 for detachable engaging with the connecting member 411.

The vertical shaft 401 of the swivel rack 4 is connected on the middle portion of the U-shaped arm 40 and extended downwardly for pivotally mounted on the vertical shaft hole 31. This allows caregivers to change the direction of the seat frame member 200 or the baby carrier by turning the swivel rack 4.

The release mechanism 5 is operatively mounted on the foldable upper frame 10 and associates with the pair of lockable articulated arms 2 so as to actuate the folding of the collapsible wheeled frame and the foldable upper frame.

Preferably, the release mechanism 5 may include resilient member 50, a slidable driving member 51, a first connecting member 52, a driving member 53, a driven member 54, a slider 55, and a second connecting member 56.

The slidable driving member 51 is slidably mounted on the push arm 110 and associated with the driving member 53 via the first connecting member 52. The first connecting member 52 is threaded through the push arm 110 and has a lower end which is slidably engaged with a skewed guiding slot 531 formed in the driving member 53.

Each joint 100 may pivotally couple with the mount 41 and forming a space for receiving the resilient member 50, the driving member 53, and the driven member 54. The driving member 53 has a skewed guiding slot, and has an out side for slidably engaging between the mount 41 and the joint 100 in a locked position.

Referring to the FIG. 5, the inner periphery of the mount 41 is formed with a plurality of positioning slots 412 for selectively engaging with the outside of the driving member 53. The driving member 53 is biased by the resilient member 50 and kept in the locked position thereby to lock the joint 100 in an un-rotatable position.

When the first connecting member 52 is pulled upwardly by the slidable driving member 51, the end portion of the first connecting member 52 is sliding along the skewed guiding slot 531, the forces the driving member 53 moving against the biasing of the resilient member 50 thereby to disengage from the positioning slots 412, so as to unlock the joint 100. While the joint 100 is unlocked, the push arm 110 is freely to rotate either upwardly or downwardly.

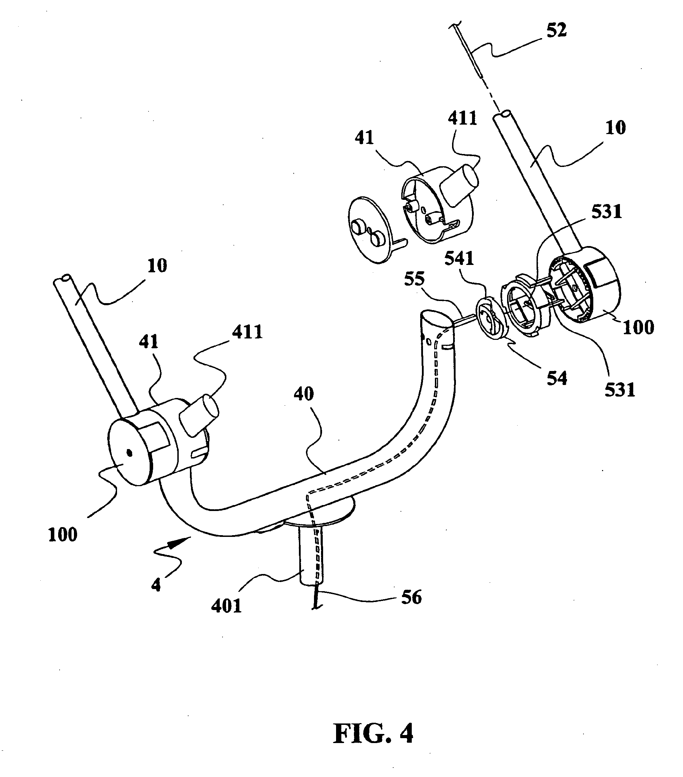

Referring to the FIGS. 3, 4 and 6, the driven member 54 has one side un-rotatably and retractably engaged with the driving member 53 and another side formed with a ramp 541. The slider 55 is movably received in the mount 41 and passes through the upper end of the U-shaped arm 40.

The slider 55 has one end kept slidably abutted on the ramp 541 by a resilient member (not shown), and another end connected with the second connecting member 56. When the joint 100 is unlocked, the driven member 54 is following the rotation of the push arm 110 and the driving member 53, and then the ramp 541 of the driven member 54 drives the slider 55 to move in a direction of pulling the second connecting member 56 upwardly to unlock the pair of lockable articulated arms 2.

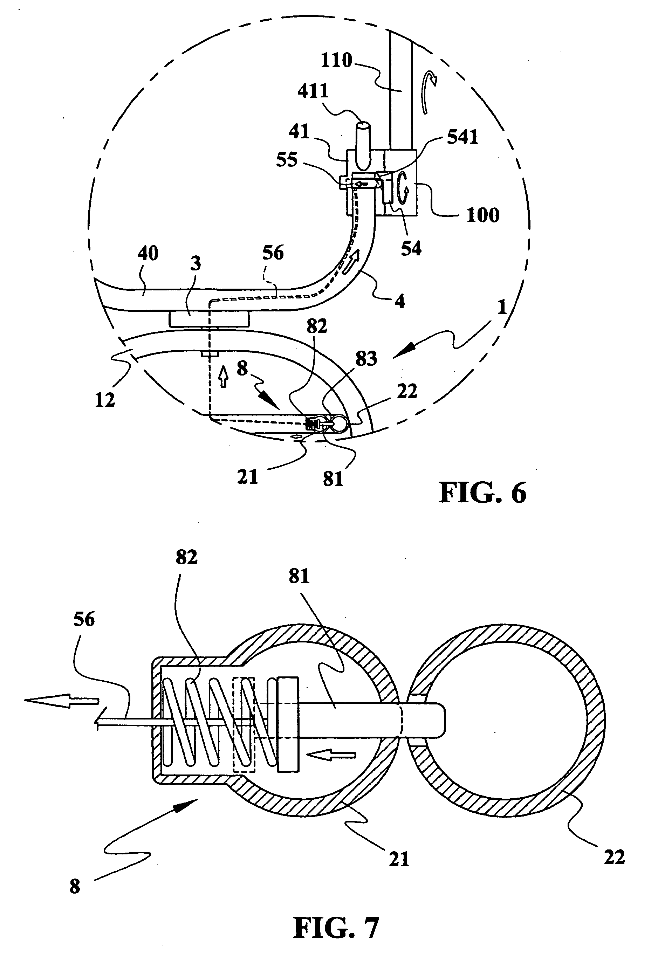

Referring to the FIG. 7, the pair of lockable articulated arms 2 includes a front arm 21, a rear arm 22, and a lockable joint 8. The lockable joint 8 is pivotally connected the front arm 21 and the rear arm 22 and has locked position for preventing the rotation therebetween.

The lockable joint 8 may simply comprises a latch member 81 and a resilient member 82. The latch member 81 is operatively mounted in the front arm 21 and has one end connect with the second connecting member 56 and biased by the resilient member 82 to latch the rear arm 22 with the opposite end thereof. When the second connecting member 56 is pulled upwardly, the latch member 81 is driven to unlatch the rear arm 22, and thereby to unlock the pair of lockable articulated arms 2 into a rotatable position.

Alternatively, the lockable joint 8 may further to embody with a first joint member 83 and a second joint member 84 pivotally connected the first joint member 83, using the first joint member 83 to connect with the front arm 21, and using the second joint member 84 to connect the rear arm 22. The latch member 81 may retractably mounted in the first joint member 83 and configured to be engagable with the second joint member 84. When the second connecting member 56 is pulled upwardly, the latch member 81 is driven to disengage from the second joint member 84, so as unlocks the pair of lockable articulated arms 2.

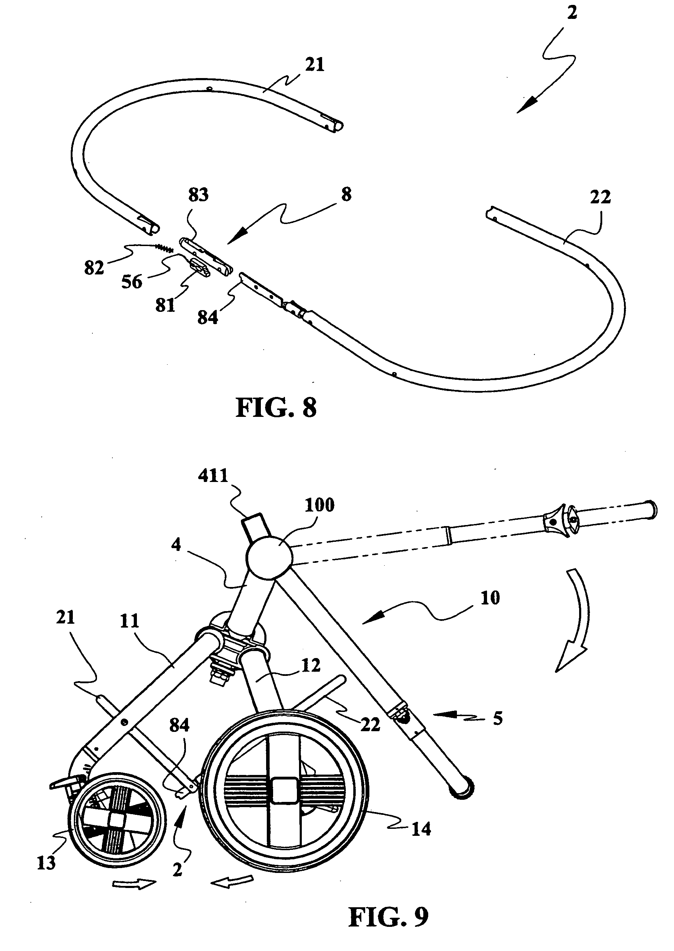

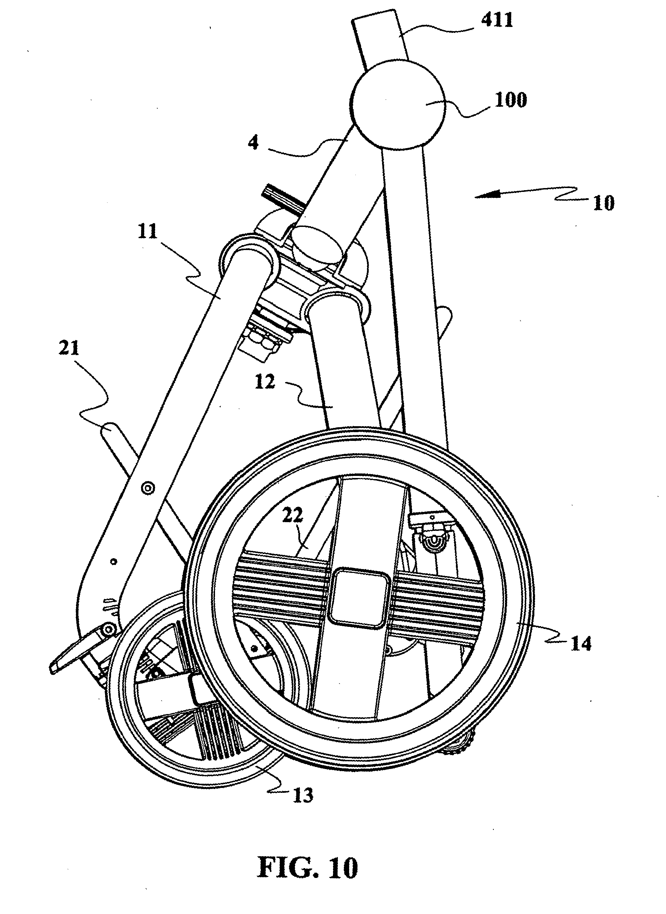

Referring to the FIG. 9, the front arm 21 is pivoted with the front strut 11, and the rear arm 22 is pivoted with the rear strut 12. When lockable joint 8 is kept in the locked position, the collapsible wheeled frame is kept in an erected position; however, when the joint 100 is unlocked, the push arm 110 can be rotate downwardly, this causes the second connecting member 56 to unlock the pair of lockable articulated arms 2, so as to allow the front strut 11 and the rear strut 12 to rotate to close to each other as shown in the FIG.10.

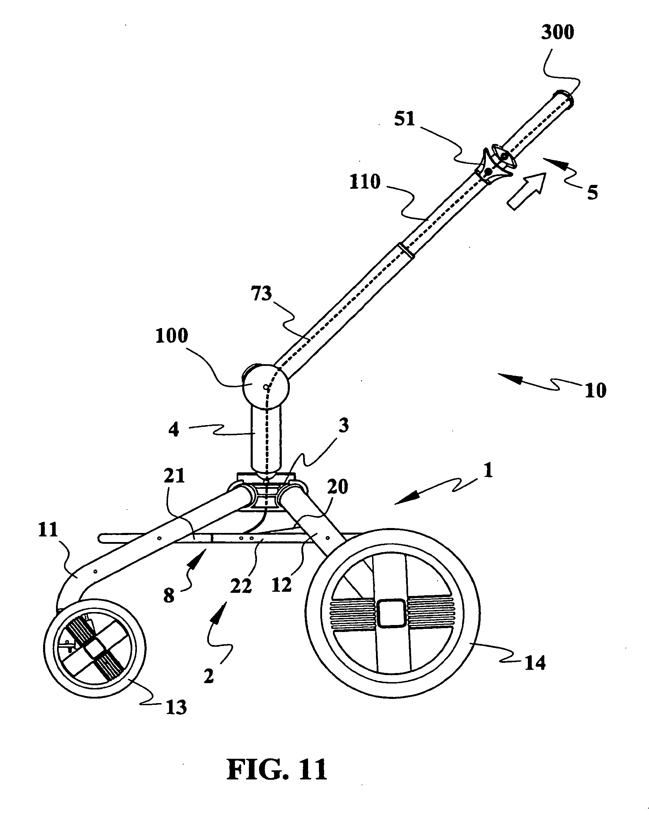

Referring to the FIG. 11, the latch member 81 is alternatively connected with the first connecting member 52 that can be driven by either the slidable driving member 51 or a one-hand controllable folding actuator as disclosed in U.S. Patent 6,443,479.

## Claims

1. A foldable baby stroller frame, comprising:
- a collapsible wheeled frame (1), having a front strut (11), a pair of rear struts (12), a pair of lockable articulated arms (2) pivotally and controllably connected between the front strut (11) and the rear struts (12);
- a foldable upper frame (10); and
- a release mechanism (5) operatively mounted on the foldable upper frame (10) for unlocking the pair of lockable articulated arms (2) for folding the collapsible wheeled frame **characterized in that**
- a swivel base (3) is pivotally connected with the front strut (11) and the rear struts (12); and
- the foldable upper frame (10) is pivotally connected and supported by the swivel base (3).

2. The foldable baby stroller frame of claim 1, wherein the pair of lockable articulated arms (2) includes:
- a front arm (21) pivotally connected with the front strut (11);
- a rear arm (22) pivotally connected with the rear struts (12); and
- a lockable joint (8) lockably and pivotally connected between the front arm (21) and the rear arm (22).

3. The foldable baby stroller frame of claim 2, wherein the lockable joint (8) includes:
- a latch member (81) retractably mounted on the pair of lockable articulated arms (2); and
- a resilient member (28) for biasing the latch member (81) to latch the pair of lockable articulated arms (2) in a locked position.

4. The foldable baby stroller frame of claim 3, wherein the latch member (81) is associated with the release mechanism (5) via a connecting member (56).

5. The foldable baby stroller frame of claim 3, wherein the release mechanism (5) comprises a slidable driving (51) member associated with the latch member (81) via a connecting member (56).

6. The foldable baby stroller frame of claim 3, wherein the release mechanism (5) comprises a one-hand controllable folding actuator associated with the latch member (81) via a connecting member (56).

7. The foldable baby stroller frame of claim 1, wherein the swivel base (3) has a vertical shaft hole (31), and the foldable upper frame (10) comprises:
- a swivel rack (4) having an U-shaped arm (40) with two distal ends and a vertical shaft (401) pivotally inserted and connected in the vertical shaft hole (31);
- a push arm (110) for pushing the baby stroller frame; and
- a joint (100) lockably connected between the swivel rack (4) and the push arm (110).

8. The foldable baby stroller frame of claim 7, wherein the foldable upper frame (10) further comprises a pair of mounts (41) connected with the distal ends of the U-shaped arm (40) for detachably supporting a seat supporting frame (200).

9. The foldable baby stroller frame of claim 8, wherein the mounts (41) each has a connecting member (411), and the seat supporting frame (200) has a pair of sockets (201) for detachable engaging with the connecting member (411).

10. The foldable baby stroller frame of claim 7, wherein the foldable upper frame (10) further comprises a pair of mounts (41) connected with the distal ends of the U-shaped arm (40) for detachably supporting a baby carrier.

11. The foldable baby stroller frame of claim 10, wherein the mounts (41) each has a connecting member (411), and the baby carrier has a pair of sockets (201) for detachable engaging with the connecting member (411).

12. The foldable baby stroller frame of claim 1, wherein
- the release mechanism (5) comprises:
-- a slidable driving member (51) movably mounted to the foldable upper frame (10);
-- a driving member (53) slidably having a skewed guiding slot (531);
-- a first connecting member (52) having a lower end slidably engaged within the skewed guiding slot (531) and an upper end connected with the slidable driving member (51); and
-- a resilient member (50) for biasing and keeping the driving member (53) in a locked position; and
- the foldable upper frame (10) comprises:
-- a swivel rack (4) having an U-shaped arm (40) with two distal ends and a vertical shaft (401) pivotally supported and connected with the collapsible wheeled frame (1);
-- a pair of mounts (41), each having a connecting member (411) and an inner periphery formed with a plurality of positioning slots (412) for slidably engage with the driving member (53);
-- a pair of joints (100), each pivotally couple with one of the pair of mounts (41) and formed with a space for receiving the resilient member (50) and the driving member (53); and
-- a push arm (110) having two ends connected with the pair of joints (100) for lockably pivoting about the pair of mounts (41).

13. The foldable baby stroller frame of claim 12, wherein the driving member (53) is engaged with the plurality of positioning slots (412) in the locked position so as to lock the pair of joints (100).

14. The foldable baby stroller frame of claim 13, wherein the pair of joints (100) is unlocked by pulling the first connecting member (52) upwardly, thereby to force the driving member (53) moving against the biasing of the resilient member (50) and disengage from the plurality of positioning slots (412).

15. The foldable baby stroller frame of claim 13, wherein the release mechanism (5) further comprises
- a driven member (54) having a ramp (541) formed on one side thereof and retractably engaged with the driving member (53) and driven by the driving member (53) to rotate while the pair of joints (100) are unlocked;
- a slider (55) biasing by a resilient member and having one end for slidably abutting on the ramp (541) of the driven member (54); and
- a second connecting member (56) having an upper end connected with the slider (55), and a lower end for associating with the pair of lockable articulated arms (2).

16. The foldable baby stroller frame of claim 15, wherein the slider (55) is driven by the ramp (541) while the pair of joints (100) is unlocked and the driven member (54) is rotated by the driving member (53), thereby to pull up the second connecting member (56) upwardly.

17. The foldable baby stroller frame of claim 15, wherein the pair of lockable articulated arms (2) is unlocked by rotating the push arm (110) while the pair of joints (100) is unlocked by moving the slidable driving member (51).

18. The foldable baby stroller frame of claim 15, wherein the pair of lockable articulated arms (2) includes
- a front arm (21) pivotally connected with the front strut (11);
- a rear arm (22) pivotally connected with the rear struts (12); and
- a lockable joint (8) associated with the slider (55) via the second connecting member (56), and lockably and pivotally connected between the front arm (21) and the rear arm (22).

19. The foldable baby stroller frame of claim 18, wherein the collapsible wheeled frame (1) further comprises a pneumatic rod having one end pivoted to the rear struts (12) and another end pivot to the pair of lockable articulated arms (2) for helping the folding of the pair of lockable articulated arms (2).

20. The foldable baby stroller frame of claim 18, wherein the collapsible wheeled frame (1) further comprises a biasing member (20) having one end pivoted to the rear struts (12) and another end pivot to the pair of lockable articulated arms (2) for helping the folding of the pair of lockable articulated arms (2).

## Patentansprüche

1. Klappbarer Kinderwagenrahmen, der umfasst:
- einen zusammenklappbaren, mit Rädern versehenen Rahmen (1), der ein vorderes Bein (11), ein Paar hintere Beine (12), ein Paar verriegelbare, angelenkte Arme (2), die zwischen dem vorderen Bein (11) und den hinteren Beinen (12) schwenkbar und steuerbar verbunden sind;
- einen klappbaren oberen Rahmen (10); und
- einen Lösemechanismus (5), der am klappbaren oberen Rahmen (10) funktionstechnisch angebracht ist, um das Paar verriegelbarer, angelenkter Arme (2) zu entriegeln, um den zusammenklappbaren, mit Rädern versehenen Rahmen zusammenzuklappen, **dadurch gekennzeichnet, dass**
- eine Drehbasis (3) mit dem vorderen Bein (11) und mit den hinteren Beinen (12) schwenkbar verbunden ist; und
- der klappbare obere Rahmen (10) mit der Drehbasis (3) schwenkbar verbunden und hierdurch unterstützt ist.

2. Klappbarer Kinderwagenrahmen nach Anspruch 1, wobei das Paar verriegelbarer, angelenkter Arme (2) umfasst:
- einen vorderen Arm (21), der mit dem vorderen Bein (11) schwenkbar verbunden ist;
- einen hinteren Arm (22), der mit den hinteren Beinen (12) schwenkbar verbunden ist; und
- ein verriegelbares Gelenk (8), das zwischen dem vorderen Arm (21) und dem hinteren Arm (22) verriegelbar und schwenkbar verbunden ist.

3. Klappbarer Kinderwagenrahmen nach Anspruch 2, wobei das verriegelbare Gelenk (8) umfasst:
- ein Riegelelement (81), das an dem Paar verriegelbarer, angelenkter Arme (2) zurückziehbar montiert ist; und
- ein elastisches Element (28), um das Riegelelement (81) vorzubelasten, um das Paar verriegelbarer, angelenkter Arme (2) in einer verriegelten Position zu verriegeln.

4. Klappbarer Kinderwagenrahmen nach Anspruch 3, wobei das Riegelelement (81) dem Lösemechanismus (5) über ein Verbindungselement (56) zugeordnet ist.

5. Klappbarer Kinderwagenrahmen nach Anspruch 3, wobei der Lösemechanismus (5) ein gleitfähiges Antriebselement (51) umfasst, das dem Riegelelement (81) über ein Verbindungselement (56) zugeordnet ist.

6. Klappbarer Kinderwagenrahmen nach Anspruch 3, wobei der Lösemechanismus (5) einen mit einer Hand steuerbaren Klappaktor umfasst, der dem Riegelelement (81) über ein Verbindungselement (56) zugeordnet ist.

7. Klappbarer Kinderwagenrahmen nach Anspruch 2, wobei die Drehbasis (3) ein vertikales Wellenloch (31) besitzt und der klappbare obere Rahmen (10) umfasst:
- einen Drehbügel (4), der einen U-förmigen Arm (40) mit zwei distalen Enden und eine vertikale Welle (401), die in das vertikale Wellenloch (31) schwenkbar eingesetzt und damit verbunden ist, besitzt;
- einen Schiebearm (110), um den Kinderwagenrahmen zu schieben; und
- ein Gelenk (100), das zwischen dem Drehbügel (4) und dem Schiebearm (110) verriegelbar verbunden ist.

8. Klappbarer Kinderwagenrahmen nach Anspruch 7, wobei der klappbare obere Rahmen (10) ferner ein Paar Halter (41) umfasst, die mit den distalen Enden des U-förmigen Arms (40) verbunden sind, um einen Sitzunterstützungsrahmen (200) lösbar zu unterstützen.

9. Klappbarer Kinderwagenrahmen nach Anspruch 8, wobei die Halter (41) jeweils ein Verbindungselement (411) besitzen und der Sitzunterstützungsrahmen (200) ein Paar Buchsen (201) besitzt, um mit dem Verbindungselement (411) in einem lösbaren Eingriff zu sein.

10. Klappbarer Kinderwagenrahmen nach Anspruch 7, wobei der klappbare obere Rahmen (10) ferner ein Paar Halter (41) umfasst, die mit den distalen Enden des U-förmigen Arms (40) verbunden sind, um einen Kindträger lösbar zu unterstützen.

11. Klappbarer Kinderwagenrahmen nach Anspruch 10, wobei die Halter (41) jeweils ein Verbindungselement (411) besitzen und der Kindträger ein Paar Buchsen (201) besitzt, um mit dem Verbindungselement (411) in einem lösbaren Eingriff zu sein.

12. Klappbarer Kinderwagenrahmen nach Anspruch 1, wobei
- der Lösemechanismus (5) umfasst:
-- ein gleitfähiges Antriebselement (51), das an dem klappbaren oberen Rahmen (10) beweglich montiert ist;
-- ein Antriebselement (53), das gleiten kann und einen schrägen Führungsschlitz (531) besitzt;
-- ein erstes Verbindungselement (52), das mit einem unteren Ende in dem schrägen Führungsschlitz (531) in einem Gleiteingriff ist und mit einem oberen Ende mit dem gleitenden Antriebselement (51) verbunden ist; und
-- ein elastisches Element (50), um das Antriebselement (53) in eine verriegelte Position vorzubelasten und dort zu halten; und
- der klappbare obere Rahmen (10) umfasst:
-- einen Drehbügel (4), der einen U-förmigen Arm (40) mit zwei distalen Enden und eine vertikale Welle (401), die in dem zusammenklappbaren, mit Rädern versehenen Rahmen (1) schwenkbar unterstützt und damit verbunden ist;
-- ein Paar Halter (41), wovon jeder ein Verbindungselement (411) besitzt und wovon ein innerer Umfang mit mehreren Positionierungsschlitzen (412) ausgebildet ist, um mit dem Antriebselement (53) in einen gleitenden Eingriff zu gelangen;
-- ein Paar Gelenke (100), wovon jedes mit einem der beiden Halter (41) schwenkbar gekoppelt ist und mit einem Zwischenraum ausgebildet ist, um das elastische Element (50) und das Antriebselement (53) aufzunehmen; und
-- einen Schiebearm (110), der zwei Enden besitzt, die mit dem Paar Gelenke (100) verbunden sind, um das Paar Halter (41) verriegelbar zu schwenken.

13. Klappbarer Kinderwagenrahmen nach Anspruch 12, wobei das Antriebselement (53) mit den mehreren Positionierungsschlitzen (412) in der verriegelten Position in Eingriff ist, um das Paar Gelenke (100) zu verriegeln.

14. Klappbarer Kinderwagenrahmen nach Anspruch 13, wobei das Paar Gelenke (100) durch Ziehen des ersten Verbindungselements (52) nach oben entriegelt wird, um das Antriebselement (53) zu drängen, sich entgegen der Vorbelastung des elastischen Elements (50) zu bewegen und seinen Eingriff in den mehreren Positionierungsschlitzen (412) zu lösen.

15. Klappbarer Kinderwagenrahmen nach Anspruch 13, wobei der Lösemechanismus (5) ferner umfasst:
- ein angetriebenes Element (54) mit einer Rampe (541), die auf einer Seite hiervon ausgebildet ist und mit dem Antriebselement (53) zurückziehbar in Eingriff ist und durch das Antriebselement (53) angetrieben wird, um sich zu drehen, während das Paar Gelenke (100) entriegelt ist;
- einen Gleiter (55), der durch ein elastisches Element vorbelastet ist und wovon ein Ende an der Rampe (541) des angetriebenen Elements (54) gleitend anliegt; und
- ein zweites Verbindungselement (56) mit einem oberen Ende, das mit dem Gleiter (55) verbunden ist, und einem unteren Ende, das dem Paar verriegelbarer angelenkter Arme (2) zugeordnet ist.

16. Klappbarer Kinderwagenrahmen nach Anspruch 15, wobei der Gleiter (55) durch die Rampe (541) angetrieben wird, während das Paar Gelenke (100) entriegelt ist, und das angetriebene Element (54) durch das Antriebselement (53) gedreht wird, um **dadurch** das zweite Verbindungselement (56) nach oben zu ziehen.

17. Klappbarer Kinderwagenrahmen nach Anspruch 15, wobei das Paar verriegelbarer, angelenkter Arme (2) durch Drehen des Schiebearms (110) entriegelt wird, während das Paar Gelenke (100) durch Bewegen des gleitfähigen Antriebselements (51) entriegelt wird.

18. Klappbarer Kinderwagenrahmen nach Anspruch 15, wobei das Paar verriegelbarer, angelenkter Arme (2) umfasst:
- einen vorderen Arm (21), der mit dem vorderen Bein (11) schwenkbar verbunden ist;
- einen hinteren Arm (22), der mit den hinteren Beinen (12) schwenkbar verbunden ist; und
- ein verriegelbares Gelenk (8), das dem Gleiter (55) über das zweite Verbindungselement (56) zugeordnet ist und zwischen dem vorderen Arm (21) und dem hinteren Arm (22) verriegelbar und schwenkbar verbunden ist.

19. Klappbarer Kinderwagenrahmen nach Anspruch 18, wobei der zusammenklappbare, mit Rädern versehene Rahmen (1) ferner einen Druckluftstab aufweist, wovon ein Ende an den hinteren Beinen (12) angelenkt ist und ein weiteres Ende an dem Paar verriegelbarer, angelenkter Arme (2) schwenkt, um das Zusammenklappen des Paars verriegelbarer, angelenkter Arme (2) zu unterstützen.

20. Klappbarer Kinderwagenrahmen nach Anspruch 18, wobei der zusammenklappbare, mit Rädern versehene Rahmen (1) ferner ein Vorbelastungselement (20) umfasst, wovon ein Ende an den hinteren Beinen (12) angelenkt ist und ein weiteres Ende an dem Paar verriegelbarer, angelenkter Arme (2) angelenkt ist, um das Zusammenklappen des Paars verriegelbarer, angelenkter Arme (2) zu unterstützen.

## Revendications

1. Cadre de poussette de bébé pliable, comprenant :
- un cadre escamotable équipé de roues (1), ayant une entretoise avant (11), une paire d'entretoises arrière (12), une paire de bras articulés (2) susceptibles d'être bloqués, reliés en pivotement de manière contrôlée entre l'entretoise avant (11) et les entretoises arrière (12) ;
- un cadre supérieur pliable (10) ; et
- un mécanisme de relâchement (5) fonctionnellement monté sur le cadre supérieur pliable (10) pour débloquer la paire de bras articulés (2) susceptibles d'être bloqués pour plier le cadre escamotable équipé de roues,
**caractérisé en ce que**
- une base pivotante (3) est reliée en pivotement à l'entretoise avant (11) et aux entretoises arrière (12) ; et
- le cadre supérieur pliable (10) est relié en pivotement et supporté par la base pivotante (3).

2. Cadre de poussette de bébé pliable selon la revendication 1,
dans lequel la paire de bras articulés (2) susceptibles d'être bloqués inclut :
- un bras avant (21) relié en pivotement à l'entretoise avant (11);
- un bras arrière (22) relié en pivotement aux entretoises arrière (12) ; et
- un joint susceptible d'être bloqué (8) relié en pivotement et capable d'être bloqué entre le bras avant (21) et le bras arrière (22).

3. Cadre de poussette de bébé pliable selon la revendication 2,
dans lequel le joint (8) susceptible d'être bloqué inclut :
- un élément de verrou (81) monté de façon rétractable sur la paire de bras articulés (2) susceptibles d'être bloqués ; et
- un élément élastique (28) pour solliciter l'élément de verrou (81) afin de verrouiller dans une position bloquée la paire de bras articulés (2) susceptibles d'être bloqués.

4. Cadre de poussette de bébé pliable selon la revendication 3,
dans lequel l'élément de verrou (81) est associé au mécanisme de relâchement (5) via un élément de liaison (56).

5. Cadre de poussette de bébé pliable selon la revendication 3,
dans lequel le mécanisme de relâchement (5) comprend un élément d'entraînement (51) coulissant, associé à l'élément de verrou (81) via un élément de liaison (56).

6. Cadre de poussette de bébé pliable selon la revendication 3,
dans lequel le mécanisme de relâchement (5) comprend un actionneur de pliage à commander d'une seule main associé à l'élément de verrou (81) via un élément de liaison (56).

7. Cadre de poussette de bébé pliable selon la revendication 1,
dans lequel la base pivotante (3) présente un trou d'un axe vertical (31), et le cadre supérieur pliable (10) comprend :
- un support pivotant (4) ayant un bras en forme de U (40) avec deux extrémités distales et un axe vertical (401) inséré en pivotement et relié dans le trou d'axe vertical (31) ;
- un bras de poussoir (110) pour pousser le cadre de poussette de bébé ; et
- un joint (100) relié de manière à pouvoir être bloqué entre le support pivotant (4) et le bras de poussoir (110).

8. Cadre de poussette de bébé pliable selon la revendication 7,
dans lequel le cadre supérieur pliable (10) comprend en outre une paire de montures (41) reliées aux extrémités distales du bras en forme de U (40) pour supporter de façon détachable un cadre de support de siège (200).

9. Cadre de poussette de bébé pliable selon la revendication 8,
dans lequel les montures (41) ont chacune un élément de liaison (411), et le cadre de support de siège (200) possède une paire d'embases (201) pour venir en engagement détachable avec l'élément de liaison (411).

10. Cadre de poussette de bébé pliable selon la revendication 7,
dans lequel le cadre supérieur pliable (10) comprend en outre une paire de montures (41) reliées aux extrémités distales du bras en forme de U (40) pour supporter de façon détachable un porte-bébé.

11. Cadre de poussette de bébé pliable selon la revendication 10,
dans lequel les montures (41) ont chacune un élément de liaison (411), et le porte-bébé possède une paire d'embases (201) pour venir en engagement détachable avec l'élément de liaison (411).

12. Cadre de poussette de bébé pliable selon la revendication 1, dans lequel
- le mécanisme de relâchement (5) comprend :
-- un élément d'entraînement coulissant (51) monté de façon mobile sur le cadre supérieur pliable (10) ;
-- un élément d'entraînement (53) qui comporte une fente de guidage de coulissement en biais (531) ;
-- un premier bras de liaison (52) ayant une extrémité inférieure engagée en coulissement avec la fente de guidage en biais (531) et une extrémité supérieure reliée à l'élément d'entraînement coulissant (51) ; et
-- un élément élastique (50) pour solliciter et maintenir l'élément d'entraînement (53) dans une position bloquée ; et
- le cadre supérieur pliable (10) comprend :
-- un support pivotant (4) ayant un bras en forme de U (40) avec deux extrémités distales et un axe vertical (401) supporté en pivotement et reliée au cadre escamotable (1) équipé de roues ;
-- une paire de montures (41), ayant chacune un élément de liaison (411) et une périphérie intérieure formée avec une pluralité de fentes de positionnement (412) pour venir en engagement coulissant avec l'élément d'entraînement (53) ;
-- une paire de joints (100), couplés chacun en pivotement avec l'une de la paire de montures (41) et formés avec un espace pour recevoir l'élément élastique (50) et l'élément d'entraînement (53) ; et
-- un bras poussoir (110) ayant deux extrémités reliées à la paire de joints (100) pour pivoter autour de la paire de montures (41) de manière à pouvoir être bloqué.

13. Cadre de poussette de bébé pliable selon la revendication 12,
dans lequel l'élément d'entraînement (53) est engagé avec la pluralité de fentes de positionnement (412) dans la position bloquée de manière à bloquer la paire de joints (100).

14. Cadre de poussette de bébé pliable selon la revendication 13,
dans lequel la paire de joints (100) est débloquée en tirant le premier élément de liaison (52) vers le haut, pour forcer ainsi l'élément d'entraînement (53) à se déplacer à l'encontre de la sollicitation de l'élément élastique (50) et à se dégager vis-à-vis de la pluralité de fentes de positionnement (412).

15. Cadre de poussette de bébé pliable selon la revendication 13,
dans lequel le mécanisme de relâchement (5) comprend en outre
- un élément entraîné (54) ayant une rampe (541) formée sur un côté de celui-ci et engagé de façon rétractable avec l'élément d'entraînement (53) et entraîné par l'élément d'entraînement (53) pour tourner alors que la paire de joints (100) sont débloqués ;
- un coulisseau (55) sollicité par un élément élastique et ayant une extrémité destinée à venir buter en coulissement sur la rampe (541) de l'élément entraîné (54) ; et
- un second élément de liaison (56) ayant une extrémité supérieure reliée au coulisseau (55), et une extrémité inférieure destinée à être associée à la paire de bras articulés (2) susceptibles d'être bloqués.

16. Cadre de poussette de bébé pliable selon la revendication 15,
dans lequel le coulisseau (55) est entraîné par la rampe (541) alors que la paire de joints (100) est débloquée et que l'élément entraîné (54) est mis en rotation par l'élément d'entraînement (53), pour tirer ainsi le second élément de liaison (56) vers le haut.

17. Cadre de poussette de bébé pliable selon la revendication 15,
dans lequel la paire de bras articulés (2) susceptibles d'être bloqués est débloquée par rotation du bras de poussoir (110) alors que la paire de joints (100) est débloquée en déplaçant l'élément d'entraînement coulissant (51).

18. Cadre de poussette de bébé pliable selon la revendication 15,
dans lequel la paire de bras articulés (2) susceptibles d'être bloqués inclut :
- un bras avant (21) relié en pivotement à l'entretoise avant (11) ;
- un bras arrière (22) relié en pivotement aux entretoises arrière (12) ; et
- un joint (8) susceptible d'être bloqué et associé au coulisseau (55) via le second élément de liaison (56), et relié en pivotement et de manière à pouvoir être bloqué entre le bras avant (21) et le bras arrière (22).

19. Cadre de poussette de bébé pliable selon la revendication 18,
dans lequel le cadre escamotable (1) équipé de roues comprend en outre une tige pneumatique ayant une extrémité montée en pivotement sur les entretoises arrière (12) et une autre extrémité montée en pivotement sur la paire de bras articulés (2) susceptibles d'être bloqués, pour aider au pliage de la paire de bras articulés (2) susceptibles d'être bloqués.

20. Cadre de poussette de bébé pliable selon la revendication 18,
dans lequel le cadre escamotable (1) équipé de roues comprend en outre un élément de sollicitation (20) ayant une extrémité montée en pivotement sur les entretoises arrière (12) et une autre extrémité montée en pivotement sur la paire de bras articulés (2) susceptibles d'être bloqués, pour aider au pliage de la paire de bras articulés (2) susceptibles d'être bloqués.
